# EUROPÄISCHE PATENTSCHRIFT

(11) **EP 3 424 091 B1**
(45) Veröffentlichungstag und Bekanntmachung des Hinweises auf die Patenterteilung: **26.11.2025**
(21) Anmeldenummer: 17706250.2
(22) Anmeldetag: 21.02.2017
(51) Int. Cl.: B25F 5/02

(54) **AKKUPACK FÜR EINE HANDWERKZEUGMASCHINE**
BATTERY PACK FOR A HAND-HELD POWER TOOL
BATTERIE D'ACCUMULATEURS POUR MACHINE-OUTIL PORTATIVE

(30) Priorität: 02.03.2016 DE 102016203429
(43) Veröffentlichungstag der Anmeldung: 09.01.2019
(73) Patentinhaber: Robert Bosch GmbH, 70442 Stuttgart (DE)
(72) Erfinder: REJMAN, Marcin, 71334 Waiblingen (DE)
(86) Internationale Anmeldenummer: PCT/EP2017/053872
(87) Internationale Veröffentlichungsnummer: WO 2017/148737

(56) Entgegenhaltungen:
- EP-A1- 2 442 381
- WO-A1-2013/077176
- JP-A- 2002 050 329
- US-B1- 6 599 657

## Beschreibung

Die vorliegende Erfindung betrifft einen Akkupack für eine Handwerkzeugmaschine nach Anspruch 1.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

Derartige Akkupacks sind grundsätzlich bekannt und weisen in der Regel eine Mehrzahl von in Parallel- und/oder Reihenschaltung verbundener wiederaufladbare Akkumulatoren, beispielsweise drei in Reihe geschaltete, zylinderförmige Li-Ionen-Zellen mit z.B. je 3,6 V mit einer Gesamtspannung von 10,8 V, auf. Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer, einer Schnittstelle oder dergleichen der Handwerkzeugmaschine anbringbar ist. Die verbundenen Akkuzellen müssen zum einen mit der Akkupackelektronik und zum anderen untereinander verbunden werden. Dabei werden für die Reihenschaltung zum Teil sogenannte Leiterbleche und/oder Kabel verwendet, die an die jeweiligen komplementären Pole einer Ackuzelle angelötet werden und diese miteinander verbinden.

Die Akkuzelle muss mit der Akkupackelektronik verbunden werden, und bei mehreren Akkuzellen müssen diese zum einen untereinander und zum anderen mit der Akkupackelektronik verbunden werden. Dabei werden für die Reihenschaltung zum Teil sogenannte Leiterbleche und/oder Kabel verwendet, die an die jeweiligen komplementären Pole einer Akkuzelle angelötet werden und diese miteinander verbinden. Die Leiterbleche und/oder Kabel sind mit den Zellverbindern über leitende Klebeverbindungen verbunden.

Das Akkupack umfasst in der Regel das Akkupackgehäuse in denen der Zellhalter entweder vollständig oder teilweise aufgenommen ist. Alternativ bildet der Zellhalter selber ein Akkupackgehäuseelement des Akkupackgehäuses aus. Dabei erweist es sich als nachteilig, dass die einzelnen Akkupackgehäusekomponente über verschiedene Verbindungselemente, insbesondere mittels Verschrauben oder Verschnappen miteinander verbunden werden müssen.

Aus der WO2013077176A1 ist ein Akkupack gemäß dem Oberbegriff des Anspruchs 1 bekannt.

### Offenbarung der Erfindung

Aufgabe der Erfindung ist es, die oben genannten Nachteile zu verbessern und einen verbesserten Akkupack für eine Handwerkzeugmaschine der eingangs genannten Art bereitzustellen, bei dem das Akkupackgehäuse möglichst kostengünstig, schnell und einfach Zusammengebaut werden kann.

Diese Aufgabe wird durch einen Akkupack gemäß Anspruch 1 gelöst. Vorteilhafte Ausgestaltungen, Varianten und Weiterbildungen der Erfindung sind den Unteransprüchen zu entnehmen.

Erfindungsgemäß ist vorgesehen, dass ein Akkupack für eine Handwerkzeugmaschine ein Akkupackgehäuse und wenigstens einen Zellenhalter aufweist, wobei der Zellenhalter mindestens eine Akkuzelle aufnimmt. Ferner weist das Akkupackgehäuse wenigstens ein klappbares Scharnier auf, wobei das Scharnier ein erstes Element und ein zweites Element miteinander verbindet. Dabei ist vorgesehen, dass das erste Element und das zweite Element einstückig und gegeneinander verschwenkbar ausgebildet sind. Auf diese Weise können zwei oder mehr Akkupackgehäusekomponente miteinander verbunden werden. Die Akkupackgehäusekomponente sind dabei zueinander drehbar gelagert.

Vorteilhafterweise nimmt der Zellenhalter mehrere miteinander in einer Parallel- und/oder in einer Reihenschaltung verbundene Akkuzellen auf, wobei jede Ackuzelle in einer Ausführungsform eine zu einer Längsachse parallel verlaufende Mantelfläche aufweist, wobei die Mantelfläche von zwei senkrecht zu der Längsachse stehenden Stirnflächen begrenzt wird, so dass die Mantelfläche und die Stirnflächen eine Außenhülle der Akkuzelle bilden.

In einer besonders bevorzugten Ausführungsform umfasst das Akkupackgehäuse den Zellenhalter, wobei der Zellenhalter das Scharnier aufweist. Die Verwendung eines erfindungsgemäßen Akkupacks erleichtert die Montage und reduziert die Teilevielfalt. Dabei ist es von Vorteil, wenn das wenigstens eine Scharnier ein Filmscharnier ist, da insbesondere Filmscharniere als Montagehilfe, insbesondere als Positionier- und Haltehilfen verwendet werden können, wobei z.B. Elektronikplatinen, Kabelführungen, Zellverbinder, Sicherungen oder sonstige Elektronikkomponenten lösbar oder dauerhaft in ihrer Lage positioniert werden können.

Bevorzugterweise weist das Akkupackgehäuse ferner wenigstens eine weitere Verbindungsvorrichtung auf, die das Scharnier in seiner Lage fixiert bzw. in einer arretierten Position hält. Dabei ist vorteilhafterweise vorgesehen, dass die weitere Verbindungsvorrichtung eine Schnappverbindung, eine Steckverbindung und/oder eine Schraubverbindung ist, so dass die über das Scharnier drehbar zueinander gelagerten Akkupackgehäusekomponente über die zusätzliche Verbindungsvorrichtung in ihrer Lage zueinander fixiert werden können. In einer besonders bevorzugten Ausgestaltung handelt es sich bei dieser Verbindungsvorrichtung um wenigstens eine am ersten Element angeordnete Rastnase und ein am zweiten Element angeordnetes Rastelement, so dass vorteilhafterweise durch die weitere Verbindungsvorrichtung eine formschlüssige und/oder eine kraftschlüssige Verbindung zwischen dem ersten Element und dem zweiten Element entsteht.

Ferner umfasst das Akkupack eine Akkupackelektronik, wobei die Akkupackelektronik zumindest eine Leiterplatte mit Kontaktelementen zur Herstellung einer elektrischen Verbindung zwischen dem Akkupack und der Handwerkzeugmaschine aufweist. Alternativ oder zusätzliche kann vorgesehen sein, dass das Akkupack eine weitere Leiterplatte, insbesondere eine flexible Leiterplatte aufweist, auf der wenigstens ein mit der Akkuzelle korrespondierendes Kontaktmittel angeordnet ist. Bevorzugterweise kontaktiert das Kontaktmittel die korrespondierende Akkuzelle an der Mantelfläche elektrisch derart, dass auf eine zusätzliche Kontaktierung der einzelnen Akkuzellen mit der Akkupackelektronik über einen Stromleiter verzichtet werden kann. Dabei können die Kontaktmittel über eine Schweiß- oder eine Lötverbindung mit der Leiterplatte verbunden sein, wodurch eine besonders einfache und sichere mechanische und elektrische Kontaktierung erreicht wird. Ferner kann durch eine entsprechend ausgeführte Schweißverbindung auch ein Toleranzausgleich sowie ein Wärmedehnungsausgleich erzielt werden.

Vorteilhafterweise weist die Akkupackelektronik einen Mikrocontroller auf, wobei der Mikrocontroller elektrisch mit dem Kontaktmittel verbunden ist und dazu konfiguriert ist, wenigstens einen Betriebsparameter der einzelnen Akkuzelle über das wenigstens eine Kontaktmittel zu erfassen. Mittels des Mikrocontrollers der Akkupackelektronik kann u. a. der Ladezustand über die Spannung der einzelnen Akkuzellen überwacht und mittels einer entsprechenden Regelung gesteuert werden. Entsprechend kann eine Einzelzellenüberwachung erfolgen, wobei einzelne Akkuzellen mittels der Kontaktmittel direkt mit der Leiterplatte der Akkupackelektronik verbunden sind. Eine derartige Verbindung kann beispielsweise durch eine Lötverbindung erfolgen, wobei die Akkupackelektronik vorteilhafterweise entsprechende Anlötpads aufweisen kann. Somit kann aufgrund der Verbindung zwischen den Akkuzellen und der Leiterplatte festgestellt werden, ob alle Akkuzellen vorschriftsmäßig geladen werden bzw. ob gegebenenfalls ein Ladestrom erreicht wird, den die Akkuzellen nicht zu verkraften vermögen. Darüber hinaus kann eine Regelung vorgesehen sein, mittels derer der Ladestrom so geregelt wird, dass einerseits eine Überlastung einzelner Akkuzellen verhindert wird, und auf der anderen Seite sämtliche Akkuzellen vollständig aufgeladen werden können. Auf diese Weise wird über lange Zeit eine gute Gebrauchsfähigkeit des entsprechenden Akkupacks erreicht.

Erfindungsgemäß ist vorgesehen, dass das Scharnier die wenigstens eine Leiterplatte an dem Akkupackgehäuse und/oder dem Zellenhalter befestigt, wobei die Leiterplatte, insbesondere die flexible Leiterplatte zwischen dem erste Element und dem zweiten Element eingeklemmt wird. Dabei weist in einer bevorzugten Ausgestaltung das Akkupackgehäuse und/oder der Zellenhalter insbesondere aber das zweite Element wenigstens ein Sichtfeld zur Anzeige des Ladezustands der Akkuzellen auf, wobei vorteilhafterweise das Akkupackgehäuse und/oder der Zellenhalter, insbesondere das zweite Element mehrere Sichtfelder aufweist, damit mittels der verschiedenen Sichtfelder unterschiedliche Ladezustände der Akkuzellen angezeigt werden können.

Mit Hilfe der beschriebenen optimierten Ausgestaltung des erfindungsgemäßen Akkupacks wird insbesondere dessen Montage bzw. die Positionierung und Montage verschiedener Komponenten, insbesondere die der Leiterplatten, der Kabelführungen, der Zellverbinder und/oder die einer Elektroniksicherungen innerhalb des Akkupackgehäuses verbessert.

Grundsätzlich können innerhalb des Akkupacks verschiedene Ausführungsformen eines Zellenhalters verwendet werden, so dass Akkuzellen mit verschiedenen Durchmessern und Längen aufgenommen werden können und eine Anwendung des Zellenhalters in unterschiedlichen Akkupacks gewährleistet werden kann.

Als Akkuzellen für ein Akkupack können verschiedene Akkumulatorentypen mit unterschiedlichen Materialien, wie beispielsweise Lithium-Ionen (Li-lon),Nickel-Cadmium (NiCd), Nickel-Metallhydrid (NiMH) oder Lithium-Polymer (LiPo), unterschiedlichen Bauformen, zum Beispiel runde, prismatische oder eckige, oder andere alternative Systeme, wie beispielsweise Brennstoffzellen, verwendet werden. Vorzugsweise werden insbesondere Lithiumionenzellen angewandt, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalters bzw. des Zellenträgers in unterschiedlichen Akkupacks erreicht werden kann.

Das erfindungsgemäße Akkupack kann auch in einem Werkzeugsystem vorgesehen sein. Dementsprechend bildet auch eine Handwerkzeugmaschine, die ein lösbar mit der Handwerkzeugmaschine verbindbares Akkupack umfasst, einen weiteren Gegenstand der Erfindung, wobei die Handwerkzeugmaschine zumindest ein korrespondierendes Gegenkontaktelement zur elektrischen und/oder mechanischen Verbindung mit der Schnittstelle des Akkupacks aufweist.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, und/ oder Bohrschrauber verstanden werden. Unter Übertragung elektrischer Energie soll in diesem Zusammenhang insbesondere verstanden werden, dass die Handwerkzeugmaschine über einen Akku und/oder über eine Stromkabelanbindung mit Energie versorgt wird.

Unter einem Elektromotor sollen ganz allgemein alle Arten von elektrischen Verbrauchern, wie zum Beispiel ein EC-Motor, ein Linearantrieb, eine Lampe, eine Pumpe, ein Lüfter, ein Kompressor oder dergleichen verstanden werden. Der Vorteil der bürstenlose EC-Motoren liegt unter anderem darin, dass sie zum einen nahezu wartungsfrei sind und durch ihren hohen Wirkungsgrad während eines Akkubetriebes eine längere Arbeitszeit pro Akkuladung ermöglichen, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Explosionsdarstellung einer ersten Ausführungsform eines erfindungsgemäßen Akkupacks;
- Fig. 3: eine perspektivische Darstellung eines Zellhalters für ein erfindungsgemäßes Akkupack; und
- Fig. 4: eine perspektivische Darstellung des Zellhalters aus Fig. 3 mit einer daran angeordneten Akkupackelektronik.

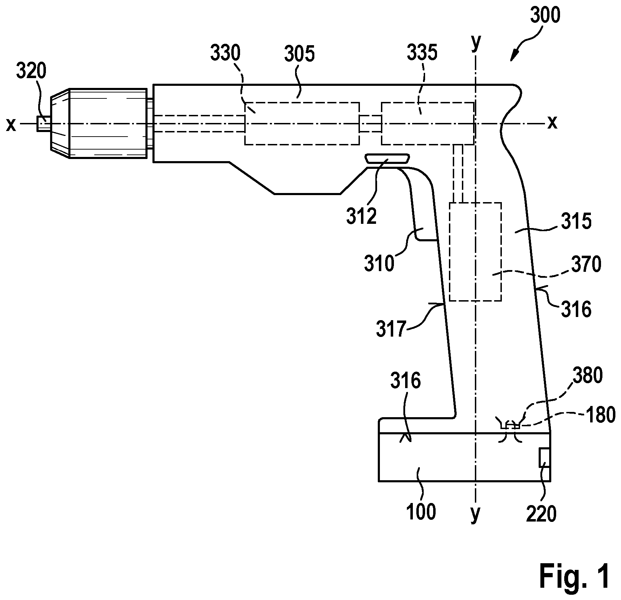

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, unabhängig davon, ob sie, wie dargestellt, mit einem Akkupack 100 als netzunabhängige Stromversorgung oder mit einer netzabhängigen Stromversorgung betrieben werden. Die Handwerkzeugmaschine 300 weist ein in einem Gehäuse 305 angeordnetes Getriebe 330 zur Übertragung eines von einem Antriebsmotor 335 erzeugten Drehmomentes auf eine um eine Achse x rotierende Antriebswelle, an welcher eine Werkzeugaufnahme 320 für ein nicht dargestelltes Werkzeug befestigt ist, und einen Handgriff 315 auf. Innerhalb des Gehäuses 305 ist eine Elektronik 370 angeordnet, welche in elektronischem und/oder mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf.

Im Bereich des Handgriffes 315 ist ein erstes Bedienelement 310 für die Energieversorgung des Antriebsmotors 335 angeordnet, wobei das erste Bedienelement 310 aus dem Gehäuse 305 für den Benutzer manuell zugänglich herausragt, so dass in einer an sich bekannten Art und Weise durch eine Druckbewegung des ersten Bedienelementes 310 eine Steuerung und/oder Regelung des Antriebsmotors bevorzugterweise in Abhängigkeit vom Verstellweg des ersten Bedienelementes 310 ermöglicht werden kann, und auch die Spannungsversorgung für den Antriebsmotor 335 ein- und/oder ausgeschaltet werden kann. Ferner weist die Handwerkzeugmaschine 300 ein zweites Bedienelement 312 in Form eines Schiebeschalters zum Einstellen der Drehrichtung des Antriebsmotors 335 der Handwerkzeugmaschine 300 auf. Das zweite Bedienelement 312 ist senkrecht zur Drehachse x der Antriebswelle, insbesondere der Werkzeugaufnahme 320 der Handwerkzeugmaschine 300, verschieblich angeordnet, so dass das zweite Bedienelement 312 bei Betätigung zwischen einer ersten Position, einer zweiten Position und einer dritten Position hin und her bewegt werden kann. Dabei legen jeweils die erste und zweite Position eine Drehrichtung des Antriebsmotors fest. Somit kann der Benutzer der Handwerkzeugmaschine 300 bereits anhand der Positionen des zweiten Bedienelements 312 erkennen, in welchem Arbeitsmodus die Handwerkzeugmaschine 300 arbeitet. Zusätzlich weist das zweite Schaltelement zwischen der ersten Position und der zweiten Position eine dritte Position, beispielsweise eine Mittelstellung, auf, wobei in der dritten Position eine elektrische, elektromechanische und/oder mechanische Unterbrechung des Motorstroms erfolgt. So kann zum Beispiel die Bedienung des ersten Schaltelementes 310 mechanisch gesperrt sein, wobei das zweite Bedienelement 312 bei Bewegung in eine dritte Position verriegelnd auf das erste Schaltelement 310 wirkt. Dabei kann das zweite Bedienelement 312 wie dargestellt als Schiebeschalter oder alternativ als Kippschalter ausgeführt sein.

Das erste Bedienelement 310 und das zweite Bedienelement 312 sind entlang der Drehachse x derart angeordnet, dass es möglich ist, sowohl das erste als auch das zweite Bedienelement 310, 312 mit dem Zeigefinger oder Mittelfinger zu betätigen. Dabei ist der Abstand zwischen dem ersten Bedienelement 310 und dem zweiten Bedienelement 312 so gewählt, dass eine Einhandbedienung der Handwerkzeugmaschine 300 möglich ist. Beide Bedienelemente 310, 312 sind ferner in einem Bereich unterhalb der Drehachse x angeordnet und ragen aus dem Gehäuse 305 heraus.

In der in der Figur 1 gezeigten Position ist das Akkupack 100 an dem Handgriff 315 der Handwerkzeugmaschine 300 befestigt und durch Verriegelungsmittel verriegelt. Durch die Anordnung des Akkupacks 100 unterhalb des Handgriffs 315 wird die Bedienung der Handwerkzeugmaschine 300 nicht gestört. Die nicht im Detail dargestellten Verriegelungsmittel umfassen unter anderem ein Verriegelungselement und ein Betätigungselement 220. Durch Betätigung des Betätigungsmittels 220 kann das Akkupack 100 von dem Handgriff 315 der Handwerkzeugmaschine 300 gelöst werden. Ferner weist die Handwerkzeugmaschine 300 eine Schnittstelle 380 auf.

Das in Figur 1 dargestellte Akkupack 100 ist als Schiebeakkupack ausgeführt, und weist eine zur Schnittstelle 380 der Handwerkzeugmaschine 300 korrespondierende Schnittstelle 180 auf. Alternativ zum Schiebeakkupack ist auch eine Ausführung als Dreh- oder Schwenkakkupack möglich, wobei das Akkupack 100 an der der Schwenkachse gegenüberliegenden Seite durch Verrasten, Verschrauben, Verklemmen oder Verspannen an dem Gehäuse 305 der Handwerkzeugmaschine 300 lösbar arretiert werden kann. Auf diese Weise kann wirksam einem möglichen Abfallen des Akkupacks vom Gehäuse 305 entgegengewirkt werden.

Zum lösbaren Anbringen des Akkupacks 100 an einer Handwerkzeugmaschine 300 oder an einem Ladegerät weist das Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei das Akkupack 100 entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann das Akkupack 100 der Handwerkzeugmaschine 300 und/oder dem Ladegerät zugeordnet werden.

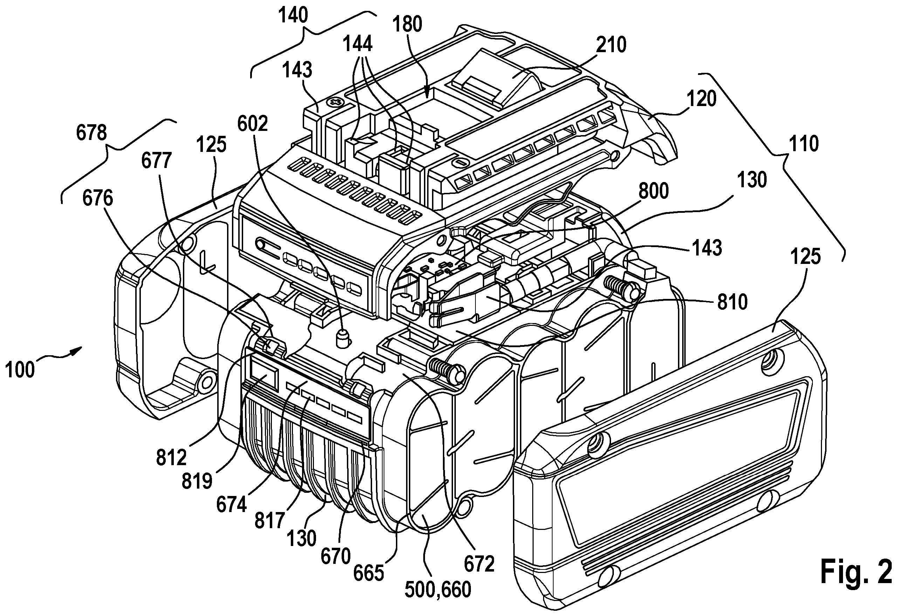

Zum Verriegeln des Akkupacks 100 am Handgriff 315 der Handwerkzeugmaschine 300 wird das Akkupack 100 entlang des Handgriffs 315 geschoben, und zwar entlang einer unteren, im Wesentlichen senkrecht zur Längsrichtung y des Handgriffs 315 ausgerichteten Außenfläche des Handgriffs 315. In der in der Figur 1 gezeigten Position ist das Akkupack 100 durch Verriegelungsmittel am Handgriff 315 verriegelt. Die Verriegelungsmittel umfassen unter anderem ein in Figur 2 dargestelltes Verriegelungselement 210 und ein Betätigungselement 220. Durch Betätigung des Betätigungsmittels 220 kann das Akkupack 100 von dem Handgriff 315 der Handwerkzeugmaschine 300 gelöst werden. Nach Entriegelung des Akkupacks 100 kann dieses vom Handgriff 315 getrennt werden. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Figur 2 zeigt ein Akkupack 100 in der Explosionsdarstellung. Das Akkupack 100 weist ein Gehäuse 110 aus einer ersten Gehäusekomponente 120 und einer zweiten Gehäusekomponente 130 auf. Hier ist deutlich zu erkennen, dass das Akkupackgehäuse 110 ferner einen Zellenhalter 600 mit einer Mehrzahl in einer Reihenschaltung verschalteter, nicht im Detail dargestellter Akkuzellen 400 aufweist, wobei die zweite Gehäusekomponente 130 den Zellenhalter 600 unmittelbar ausbildet. Der Zellhalter 600 ist zwischen den beiden Gehäusekomponenten 120, 130 positioniert. Das Akkupackgehäuse 110 weist ferner zwei Seitenkomponenten 125 auf, die im zusammengebauten Zustand die erste Gehäusekomponente 120 und die zweite Gehäusekomponente 130 bzw. den Zellhalter 600 derart zusammenhalten, dass ein Ablösen der ersten Gehäusekomponente 120 von der zweiten Gehäusekomponente 130, oder umgekehrt, verhindert wird. Das Akkupack 100 ist in der in Figur 2 dargestellten Ausführungsvariante als Schiebeakkupack ausgebildet.

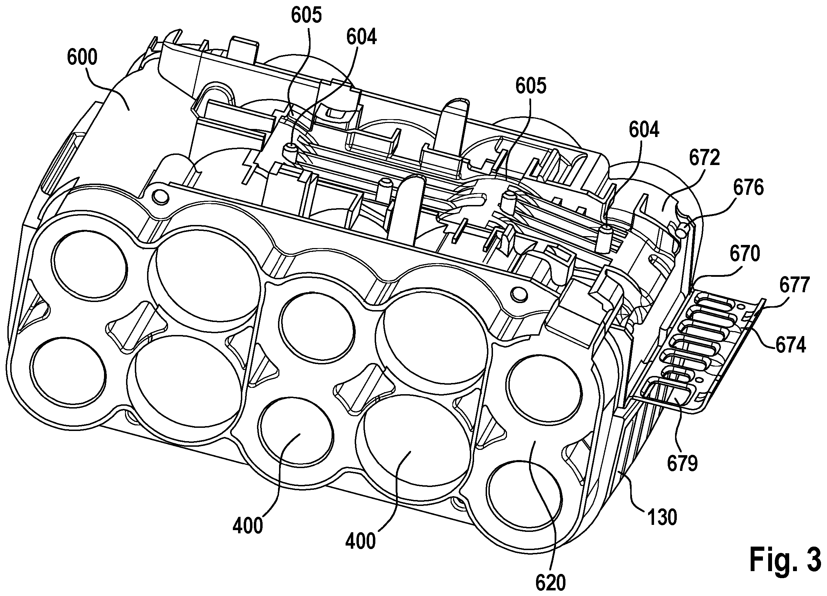

Der Zellhalter 600 dient neben der Fixierung der Akkuzellen 400 in dem Akkupackgehäuse 120, 130 auch der Kühlung der Akkuzellen 400 und besteht aus einem wärmeleitfähigen Material, beispielsweise Aluminium oder einem Kunststoff. Wie in Figur 3 erkennbar, weist der Zellenhalter 600 des Weiteren hülsenartige Isolierwandungen auf, so dass die einzelnen Akkuzellen 400 separiert werden und eine elektrische Isolierung der einzelnen Akkuzellen 400 voneinander gewährleistet werden kann. Der Wärmeübergangswiderstand zwischen den benachbarten Akkuzellen 400 und zwischen den Akkuzellen 400 und dem Zellenhalter 600 ist dabei möglichst gering, so dass die von den Akkuzellen 400 erzeugte Verlustwärme gut nach außen abgeführt und eine Überhitzung des Akkupacks im Inneren verhindert werden kann. In der dargestellten Ausführungsform weist der Zellhaltern 600 wenigstens ein klappbares Scharnier 670 auf. Das Scharnier 670 verbindet ein erstes Element 672 des Zellhalters 600 bzw. des Ackupackgehäuses 110 mit einem zweiten Element 674 des Zellhalters 600 bzw. des Akkupackgehäuses 110, wobei das erste Element 672 und das zweite Element 674 einstückig und gegeneinander verschwenkbar als Filmscharnier 670 ausgebildet sind. Auf diese Weise können zwei oder mehr Akkupackgehäusekomponente miteinander verbunden werden, wobei die beiden Akkupackgehäusekomponente dabei zueinander drehbar gelagert sind. Filmscharniere 670 können während der Montage des Akkupacks 100 als Montagehilfe, insbesondere als Positionier- und Haltehilfen verwendet werden, so dass beispielsweise Leiterplatten 810, 812, Kabelführungen, Zellverbinder, Sicherungen und/oder sonstige Elektronikkomponenten lösbar und/oder dauerhaft in ihrer Lage am Akkupack 100 bzw. innerhalb des Akkupackgehäuses 110 positioniert werden können.

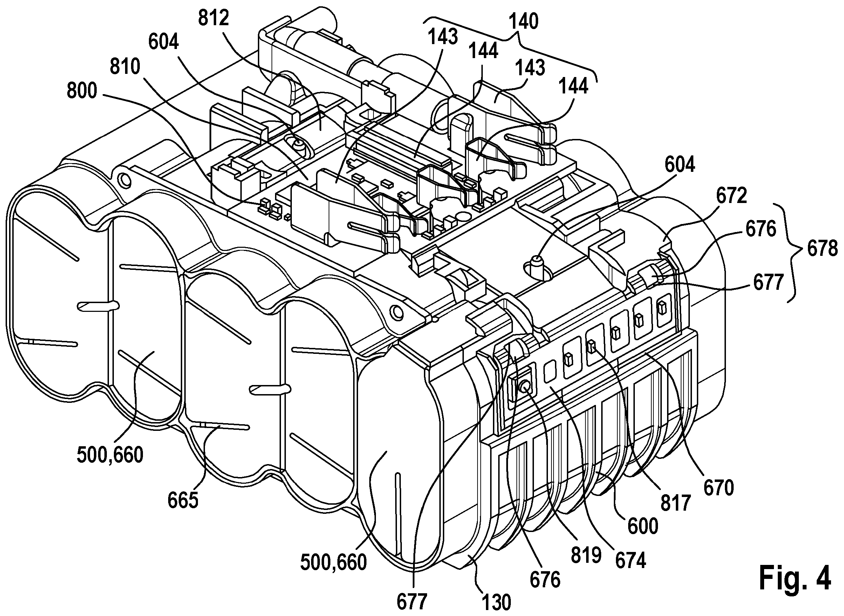

Wie insbesondere in der Figur 4 zu erkennen ist, weist die Akkupackelektronik 800 zumindest eine flexible Leiterplatte 812 mit wenigstens einem mit der Ackuzelle 400 korrespondierenden Kontaktmittel 840 auf, wobei in der dargestellten Ausführungsform die flexible Leiterplatte 812 zwischen dem ersten Element 672 und dem zweiten Element 674 eingeklemmt ist. Ferner weist der Zellhalter 600 mehrere Positionierungselemente 604 auf, um die flexible Leiterplatte 812 in ihrer Position zu halten, wobei die Positionierungselemente 604 im montierten Zustand in korrespondierende Ausnehmungen 816 der flexiblen Leiterplatte 812 greifen. Um das Scharnier in einer arretierten Position zu halten, weist das Akkupackgehäuses 110 in der dargestellten Ausführungsvariante zwei weitere Verbindungsvorrichtung 678 auf. Die weitere Verbindungsvorrichtung 678 kann eine Schnappverbindung, eine Steckverbindung und/oder eine Schraubverbindung sein. Im Falle einer Schnappverbindung weist die Verbindungsvorrichtung 678 wenigstens eine am ersten Element 672 angeordnete Rastnase 676 und ein am zweiten Element 674 angeordnetes Rastelement 677 auf, so dass die Verbindungsvorrichtung 678 nach einer erfolgten Montage eine formschlüssige und/oder eine kraftschlüssige Verbindung zwischen dem ersten Element 672 und dem zweiten Element 674 eingeht.

Das zweite Element 674 weist mehrere Sichtfelder 679 auf, die jeweils einen unterschiedlichen Ladezustand der Akkuzellen 400 anzeigen. Zu diesem Zwecke weist die flexible Leiterplatte 812 mehrere elektrische Bauteile, insbesondere wenigstens ein Betätigungselement 819 und mehrere Leuchtanzeigen 817auf. Nach erfolgter Montage der flexiblen Leiterplatte 812 zwischen dem ersten Element 672 und dem zweiten Element 674 ermöglichen die Sichtfelder 679 im Bereich des zweiten Elementes 674 eine Anzeige der unterschiedlichen Ladezustände der Akkuzellen 400.

Der Einsatz von Filmscharnieren erleichtert und beschleunigt die Montage des Akkupackgehäuses 110, wobei darüber hinaus Bauteile reduziert werden, so dass durch die Verwendung eines derartigen Scharniers ein sehr günstiges Fügeverfahren ermöglicht wird. Mit einem Filmscharnier können beispielsweise Leiterplatten 810, 812, Kabelführungen, Zellverbinder 500, Sicherungen oder sonstige Elektronikkomponenten positioniert und anschließend entweder dauerhaft oder lösbar in ihrer Lage arretiert werden.

Die Verbindung der Akkuzellen 400 untereinander wird über die Zellverbinder 500 realisiert, die insbesondere in den Figuren 2 und 4 dargestellt sind. Durch die Zellverbinder 500 kann eine elektrische Verschaltung der Akkuzellen 400 untereinander in Parallel- und/oder Reihenschaltung vorgenommen werden. In den in den Figuren 2 und 4 dargestellten Ausführungsformen ist ferner zu erkennen, dass innerhalb des Akkupackgehäuses 110 an der Oberfläche des Zellenhalters 600 eine Leiterplatte 810 mit einer Akkupackelektronik 800 befestigt ist. Auf der Leiterplatte 810 sind Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät angeordnet. Dabei sind die Kontaktelemente 143 als Spannungskontaktelemente ausgebildet und dienen als Lade- und/oder Entladekontaktelemente, wohingegen die Kontaktelemente 144 als Signalkontaktelemente ausgebildet sind und der Signalübertragung vom Akkupack 100 zu der Handwerkzeugmaschine 300 oder dem Ladegerät und/oder von der Handwerkzeugmaschine 300 oder dem Ladegerät zum Akkupack 100 dienen.

Ferner sind in den Figuren 2 und 4 Zellverbinder 500 dargestellt, durch die eine elektrische Verschaltung der Akkuzellen 400 untereinander in Parallel- und/oder Reihenschaltung vorgenommen werden kann. Dabei werden die einzelnen Ackuzellen 400 zur mechanischen Fixierung in dem Zellenhalter 600 beabstandet voneinander aufgenommen. Jede Akkuzelle 400 weist eine zu einer Längsachse x parallel verlaufende Mantelfläche auf, wobei die Mantelfläche von zwei senkrecht zu der Längsachse x stehenden Stirnflächen begrenzt wird, an denen sich die elektrischen Pole der Akkuzellen 400 befinden.

Grundsätzlich von Vorteil ist, wenn der Zellenhalter 600, wie in den Figuren 2 und 4 dargestellt, bereichsweise eine Außenseite des Akkupackgehäuses 110, insbesondere die zweite Gehäusekomponente 130 ausbildet. Ferner ist es von Vorteil, wenn die Seitenkomponenten 125 aus dem gleichen Material bestehen wie das restliche Akkupackgehäuse 110, vorzugsweise aus einem synthetisch, technisch verwendbaren thermoplastischen Kunststoff wie beispielsweise einem Polyamid, besteht. Auf diese Weise können Kosten reduziert und der Montageaufwand gering gehalten werden.

Alternativ können die Seitenkomponenten 125 zumindest teilweise aus einem Metall, vorzugsweise aus einem Aluminium- oder Magnesiumdruckguss bestehen, wobei in diesem Fall eine ausreichende bzw. zuverlässige Isolationseinlage, beispielsweise ein elastisches wärmeleitendes Element 650 zwischen den Zellverbindern 500 und den Seitenkomponenten 125 verwendet werden muss. Das elastische wärmeleitende Element 650 ist vorteilhafterweise zwischen der Stirnflächen der Akkuzellen 400 und einer im Wesentlichen parallel zu der Stirnflächen der Akkuzellen 400 verlaufenden Wandung des Akkupackgehäuses 110 angeordnet, so dass ein thermischer Kontakt mit den Stirnflächen der Akkuzellen 400 entsteht und Wärme von den Akkuzellen 400 in Richtung der Wandung des Akkupackgehäuses 110 abführt wird. Das elastische wärmeleitende Element 650 besteht zumindest teilweise aus einem wärmeleitenden Material, das zumindest einer der Materialgruppen der Elastomere, der thermoplastischen Elastomere oder der Kohlefasern angehört. Auf diese Weise kann gewährleistet werden, dass das elastische wärmeleitende Element 650 zum einen eine Wärmeleitfähigkeit aufweist, die größer als 0,15 W/mK, bevorzugterweise größer als 0,20 W/mK, besonders bevorzugterweise zwischen 0,20 W/mK und 0,50 W/mK ist und zum anderen eine Shore-Härte aufweist, die kleiner als 50 Shore A ist und bevorzugterweise zwischen 20 Shore A und 45 Shore A liegt.

Ferner ist es von Vorteil, wenn das elastische wärmeleitende Element 650 mit der jeweiligen Seitenkomponente 125 in unmittelbarem thermischem Kontakt steht, wobei das elastische wärmeleitende Element 650 unmittelbar in der Seitenkomponente 125 des Akkupackgehäuses 110 angeordnet oder sogar einstückig mit diesem hergestellt ist. Wenn die Seitenkomponenten 125 aus dem gleichen Material bestehen wie das restliche Akkupackgehäuse 110, vorzugsweise aus einem synthetischen, technisch verwendbaren thermoplastischen Kunststoff, wie beispielsweise einem Polyamid, ermöglicht dies, dass das elastische wärmeleitende Element 650 zusammen mit der Seitenkomponente 125 in einem Spritzgussverfahren, beispielsweise einem 2K-Spritzgussverfahren, vorzugsweise in einem gemeinsamen Arbeitsgang und insbesondere einstückig hergestellt werden kann. Auf diese Weise können Kosten reduziert und der Montageaufwand gering gehalten werden. Vorteilhafterweise besteht das elastische wärmeleitende Element 650 zumindest teilweise aus einem wärmeleitenden Material wie beispielsweise einem Elastomer oder einem thermoplastischen Elastomer besteht. Das Wärmespreizelement 660 bzw. die Zellverbinder 500 stehen somit sowohl in thermischem Kontakt mit dem elastische wärmeleitende Element 650 als auch mit der Wandung des Akkupackgehäuses 110 und sorgen somit für eine gleichmäßige Beaufschlagung der Wandung des Akkupackgehäuses 110 mit Wärme.

In den in den Figuren 2 und 4 dargestellten Ausführungsformen ist ferner zu erkennen, dass im Bereich der Stirnflächen der Akkuzellen 400 zwischen der elastischen wärmeleitenden Einlage 650 und der Wandung des Akkupackgehäuses 110 die Zellverbinder 500 derart großflächig ausgestaltet sind, dass sie, neben ihrer Funktion eine elektrische Verschaltung der Akkuzellen 400 untereinander in Parallel- und/oder Reihenschaltung zu gewährleisten, auch die Funktion des Wärmespreizelementes 660 übernehmen und den erwünschten Wärmeübergang unterstützen können. Obwohl in den Figuren nicht im Detail dargestellt, ist es vorteilhaft, wenn das Wärmespreizelement 660 und der Zellverbinder 500 als Verbundbauteil, insbesondere als einstückiges Verbundbauteil ausgebildet sind und in den Bereichen, in denen der Wärmeübergang unerwünscht ist und möglichst weitgehend unterbunden werden soll, schlitzförmige Aussparungen 665 aufweisen, wobei für jede Akkuzelle 400 eine Aussparung 665 vorgesehen ist. Auf diese Weise kann gewährleistet werden, dass die von den Akkuzellen 400 punktuell auf die Zellverbinder 500 bzw. das Wärmespreizelement 660 übertragene Verlustwärme unmittelbar an das mit den Zellverbindern 500 in thermischem Kontakt stehende elastische Element 650 übertragen werden kann, wobei die als Wärmespreizelement 660 ausgeführten Zellverbinder 500 die punktuell übertragene Verlustwärme aufgrund der Aussparungen 665 auf die gesamte Fläche verteilen und an das elastische Element 650 übertragen.

In den Bereichen, in denen der Wärmeübergang unerwünscht ist und möglichst weitgehend unterbunden werden soll, weist das Wärmespreizelement 660 eine Mehrzahl von Aussparungen 665 auf. Diese sind über die gesamte Fläche des Wärmespreizelementes 660 verteilt angeordnet, wobei in der dargestellten Ausführungsform für jede Akkuzelle 400 eine Aussparung 665 vorgesehen ist. Auf diese Weise kann gewährleistet werden, dass die von den Akkuzellen 400 punktuell auf das mit den Akkuzellen 400 in thermischem Kontakt stehende elastische Element 650 übertragene Verlustwärme unmittelbar an das mit dem elastischen Element 650 in thermischem Kontakt stehende unmittelbar angrenzende Wärmespreizelement 660 übertragen werden kann. Das Wärmespreizelement 660 verteilt die relativ punktuell übertragene Verlustwärme aufgrund der Aussparungen 665 auf die gesamte Fläche der jeweiligen Seitenkomponenten 125 des Ackupackgehäuses 110, wobei das Wärmespreizelement 660 auch mit der jeweiligen Seitenkomponente 125 in unmittelbarem thermischen Kontakt steht.

## Patentansprüche

1. Akkupack (100) für eine Handwerkzeugmaschine (300), aufweisend
ein Akkupackgehäuse (110) und wenigstens einen Zellenhalter (600), wobei der Zellenhalter (600) mindestens zwei miteinander in einer Parallel- und/oder in einer Reihenschaltung verbundene Akkuzellen (400) aufnimmt, wobei das Akkupackgehäuse (110) wenigstens ein klappbares Scharnier (670) aufweist, wobei das Scharnier (670) ein erstes Element (672) und ein zweites Element (674) miteinander verbindet, wobei
das erste Element (672) und das zweite Element (674), einstückig und gegeneinander verschwenkbar ausgebildet sind; und wobei
das Akkupack (100) eine Akkupackelektronik (800) aufweist, wobei die Akkupackelektronik (800) zumindest eine Leiterplatte (810) mit wenigstens einem Kontaktelement (140) zur Herstellung einer elektrischen Verbindung zwischen dem Akkupack (100) und der Handwerkzeugmaschine (300) und/oder eine flexible Leiterplatte (812) mit wenigstens einem mit der Akkuzelle (400) korrespondierenden Kontaktmittel (840) umfasst,
**dadurch gekennzeichnet, dass**
die wenigstens eine Leiterplatte (810) und/oder die flexible Leiterplatte (812) zwischen dem ersten Element (672) und dem zweiten Element (674) eingeklemmt ist.

2. Akkupack (100) nach Anspruch 1, **dadurch gekennzeichnet, dass** das Akkupackgehäuse (110) den Zellenhalter (600) umfasst, und der Zellenhalter (600) das Scharnier (670) aufweist.

3. Akkupack (100) nach Anspruch 1 oder 2, **dadurch gekennzeichnet, dass** das wenigstens eine Scharnier (670) ein Filmscharnier ist.

4. Akkupack (100) einem der Ansprüche 1 bis 3, **dadurch gekennzeichnet, dass** das Akkupackgehäuse (110) ferner wenigstens eine weitere Verbindungsvorrichtung (678) aufweist, die das Scharnier (670) in einer arretierten Position hält.

5. Akkupack (100) nach Anspruch 4, **dadurch gekennzeichnet, dass** die weitere Verbindungsvorrichtung (678) eine formschlüssige und/oder eine kraftschlüssige Verbindung ist.

6. Akkupack (100) nach einem der Ansprüche 4 oder 5, **dadurch gekennzeichnet, dass** die weitere Verbindungsvorrichtung (678) eine Schnappverbindung, eine Steckverbindung und/oder eine Schraubverbindung ist.

7. Akkupack (100) nach einem der Ansprüche 4 bis 6, **dadurch gekennzeichnet, dass** die Verbindungsvorrichtung (678) wenigstens eine am ersten Element (672) angeordnete Rastnase (676) und ein am zweiten Element (674) angeordnetes Rastelement (677) aufweist.

8. Akkupack (100) nach einem der Ansprüche 1 bis 7, **dadurch gekennzeichnet, dass** das Akkupackgehäuse (110) und/oder der Zellenhalter (600), und insbesondere das zweite Element (674) wenigstens ein Sichtfeld (679) zur Anzeige des Ladezustands der Akkuzellen (400) aufweist.

9. Akkupack (100) nach einem der Ansprüche 1 bis 8, **dadurch gekennzeichnet, dass** das Akkupackgehäuse (110) und/oder der Zellenhalter (600) insbesondere das zweite Element (674) mehrere Sichtfelder (679) aufweist, die jeweils einen unterschiedlichen Ladezustand der Akkuzellen (400) anzeigen.

10. Handwerkzeugmaschine (300) umfassend ein Gehäuse (305) mit einem Handgriff (315), einen in dem Gehäuse (305) angeordneten Antriebsmotor (335) zum Antrieb einer mechanischen Schnittstelle (320), eine in dem Gehäuse (305) angeordnete erste Elektronik (370) und ein lösbar mit der Handwerkzeugmaschine (300) verbindbares Akkupack (100) nach einem der vorangehenden Ansprüche, wobei das Akkupack (100) im eingebauten Zustand elektrisch mit der Handwerkzeugmaschine (300) verbunden ist.

## Claims

1. Battery pack (100) for a handheld power tool (300), having
a battery pack housing (110) and at least one cell holder (600), wherein
the cell holder (600) receives at least two battery cells (400) that are connected to one another in parallel and/or in series, wherein the battery pack housing (110) has at least one folding hinge (670), wherein the hinge (670) connects a first element (672) and a second element (674) to one another, wherein
the first element (672) and the second element (674) are formed in one piece and designed to be pivotable counter to one another; and wherein
the battery pack (100) has battery pack electronics (800), wherein the battery pack electronics (800) comprise at least one printed circuit board (810) having at least one contact element (140) for making an electrical connection between the battery pack (100) and the handheld power tool (300) and/or comprise a flexible printed circuit board (812) having at least one contact means (840) corresponding to the battery cell (400),
**characterized in that**
the at least one printed circuit board (810) and/or the flexible printed circuit board (812) is clamped between the first element (672) and the second element (674).

2. Battery pack (100) according to Claim 1, **characterized in that** the battery pack housing (110) comprises the cell holder (600), and the cell holder (600) includes the hinge (670).

3. Battery pack (100) according to Claim 1 or 2, **characterized in that** the at least one hinge (670) is a film hinge.

4. Battery pack (100) according to one of Claims 1 to 3, **characterized in that** the battery pack housing (110) furthermore has at least one further connecting device (678) that keeps the hinge (670) in a locked position.

5. Battery pack (100) according to Claim 4, **characterized in that** the further connecting device (678) is an interlocking and/or frictional connection.

6. Battery pack (100) according to either of Claims 4 and 5, **characterized in that** the further connecting device (678) is a snap-on connection, a plugged connection and/or a screwed connection.

7. Battery pack (100) according to one of Claims 4 to 6, **characterized in that** the connecting device (678) has at least one latching lug (676) arranged on the first element (672) and one latching element (677) arranged on the second element (674).

8. Battery pack (100) according to one of Claims 1 to 7, **characterized in that** the battery pack housing (110) and/or the cell holder (600), and in particular the second element (674), has at least one viewing area (679) for displaying the state of charge of the battery cells (400).

9. Battery pack (100) according to one of Claims 1 to 8, **characterized in that** the battery pack housing (110) and/or the cell holder (600), and in particular the second element (674), has multiple viewing areas (679) that each display a different state of charge of the battery cells (400).

10. Handheld power tool (300) comprising a housing (305) having a handle (315), a drive motor (335) arranged in the housing (305) for driving a mechanical interface (320), first electronics (370) arranged in the housing (305) and a battery pack (100) according to one of the preceding claims able to be connected detachably to the handheld power tool (300), wherein the battery pack (100), when it is in the installed state, is electrically connected to the handheld power tool (300).

## Revendications

1. Bloc accumulateur (100) pour une machine-outil électroportative (300), comprenant
un boîtier (110) de bloc accumulateur et au moins un porte-cellule (600),
le porte-cellule (600) accueillant au moins deux cellules d'accumulateur (400) reliées entre elles dans un montage en parallèle et/ou en série, le boîtier (110) de bloc accumulateur comprenant au moins une charnière (670) rabattable, la charnière (670) reliant l'un à l'autre un premier élément (672) et un deuxième élément (674),
le premier élément (672) et le deuxième élément (674) étant conçus d'un seul tenant et pouvant pivoter l'un par rapport à l'autre ; et
le bloc accumulateur (100) comportant une électronique de bloc accumulateur (800), l'électronique de bloc accumulateur (800) comprenant au moins un circuit imprimé (810) possédant au moins un élément de contact (140) destiné à l'établissement d'une liaison électrique entre le bloc accumulateur (100) et la machine-outil électroportative (300) et/ou un circuit imprimé souple (812) possédant au moins un moyen de contact (840) correspondant à la cellule d'accumulateur (400),
**caractérisé en ce que**
ledit au moins un circuit imprimé (810) et/ou le circuit imprimé souple (812) est pincé entre le premier élément (672) et le deuxième élément (674).

2. Bloc accumulateur (100) selon la revendication 1, **caractérisé en ce que** le boîtier de bloc accumulateur (110) comprend le porte-cellule (600), et **en ce que** le porte-cellule (600) comporte la charnière (670).

3. Bloc accumulateur (100) selon la revendication 1 ou 2, **caractérisé en ce que** ladite au moins une charnière (670) est une charnière à film.

4. Bloc accumulateur (100) selon l'une des revendications 1 à 3, **caractérisé en ce que** le boîtier de bloc accumulateur (110) comporte en outre au moins un autre dispositif de liaison (678), qui maintient la charnière (670) dans une position bloquée.

5. Bloc accumulateur (100) selon la revendication 4, **caractérisé en ce que** l'autre dispositif de liaison (678) est une liaison par complémentarité de forme et/ou une liaison par complémentarité de force.

6. Bloc accumulateur (100) selon l'une des revendications 4 ou 5, **caractérisé en ce que** l'autre dispositif de liaison (678) est une liaison par encliquetage, une liaison par enfichage et/ou une liaison par vis.

7. Bloc accumulateur (100) selon l'une des revendications 4 à 6, **caractérisé en ce que** le dispositif de liaison (678) comporte au moins un cran d'arrêt (676) agencé sur le premier élément (672) et un élément d'encliquetage (677) agencé sur le deuxième élément (674).

8. Bloc accumulateur (100) selon l'une des revendications 1 à 7, **caractérisé en ce que** le boîtier de bloc accumulateur (110) et/ou le porte-cellule (600), et en particulier le deuxième élément (674), comporte au moins une zone de visualisation (679) destinée à l'affichage de l'état de charge des cellules d'accumulateur (400).

9. Bloc accumulateur (100) selon l'une des revendications 1 à 8, **caractérisé en ce que** le boîtier de bloc accumulateur (110) et/ou le porte-cellule (600), en particulier le deuxième élément (674), comporte plusieurs zones de visualisation (679), qui indiquent respectivement un état de charge différent des cellules d'accumulateur (400).

10. Machine-outil électroportative (300) comprenant un boîtier (305) possédant une poignée (315), un moteur d'entraînement (335) agencé dans le boîtier (305) pour l'entraînement d'une interface mécanique (320), une première électronique (370) agencée dans le boîtier (305) et un bloc accumulateur (100) pouvant être relié de manière amovible à la machine-outil électroportative (300) selon l'une des revendications précédentes, le bloc accumulateur (100) étant relié électriquement à la machine-outil électroportative (300) dans l'état monté.
